# EUROPÄISCHE PATENTSCHRIFT

(11) **EP 1 619 517 B1**
(45) Veröffentlichungstag und Bekanntmachung des Hinweises auf die Patenterteilung: **05.06.2013**
(21) Anmeldenummer: 05014595.2
(22) Anmeldetag: 06.07.2005
(51) Int. Cl.: A01B 79/00, A01D 41/12, G01S 1/68, H04Q 9/02, G05D 1/02, A01D 75/00

(54) **Kommunikationssystem für mobile und stationäre Einrichtung**
Communication system for mobile and static devices
Système de communication pour des dispositifs mobiles et stationaires

(30) Priorität: 19.07.2004 DE 102004034799
(43) Veröffentlichungstag der Anmeldung: 25.01.2006
(73) Patentinhaber: CLAAS Selbstfahrende Erntemaschinen GmbH, 33428 Harsewinkel (DE)
(72) Erfinder: Fitzner, Werner, 48231 Warendorf (DE); Wippersteg, Heinz-Hermann, 32257 Bünde (DE); Steckel, Thilo, 33330 Gütersloh (DE)

(56) Entgegenhaltungen:
- EP-A- 1 219 153
- WO-A-00/58800
- WO-A-98/17032
- DE-A1- 4 322 293

## Beschreibung

Die Erfindung betrifft ein Kommunikationssystem für mobile und/oder stationäre Einrichtungen nach dem Oberbegriff der Ansprüche 1 und 17.

Unter anderem aus der DE 43 22 293 ist ein Verfahren zum elektronischen Managen von landwirtschaftlichen Arbeitsmaschinen bekannt geworden, bei dem eine zentrale Recheneinheit Arbeitsabläufe zwischen Arbeitsmaschinen koordiniert. Das offenbarte Verfahren zielt insbesondere darauf ab, dass dem Landwirt ein Hilfsmittel bereit gestellt wird, mit dem er seine Arbeitsmaschinenflotte effizient koordinieren und in Abhängigkeit von den ermittelten Erträgen auszubringende Hilfsstoffe. gezielt verabreichen kann. Dies reduziert die Kosten für die einzusetzenden Hilfsstoffe, da nunmehr beispielsweise nur soviel Düngemittel in den Boden eingebracht werden muss, wie diesem zuvor durch die sensierte Erntegutmenge entzogen wurde. Damit diese Düngemittelausbringung geographisch sehr präzise erfolgen kann, werden die Ertragsdaten mittels Satellitennavigation erfasst und in einer Datenbank hinterlegt, die dann zur Ausbringung des Düngers abgerufen wird. Je nach Ausführungsform ist es möglich, dass diese georeferenzierten Daten vor dem Einsatz in einer Recheneinheit der jeweiligen Arbeitsmaschine hinterlegt oder während des Einsatzes online an die Recheneinheit der landwirtschaftlichen Arbeitsmaschine übermittelt werden.

In einer Ausführungsform des Verfahrens kann die als Mähdrescher ausgeführte landwirtschaftliche Erntemaschine auch ohne Einbeziehung eines Leitrechners unmittelbar Informationen an Sä- und Düngemaschinen übermitteln, die zeitgleich die von dem Mähdrescher bereits abgeerntete Fläche bearbeiten. Wegen der einseitigen Ausrichtung derartiger Managementsysteme auf die bedarfsgerechte Ausbringung von Hilfsstoffen in Abhängigkeit vom ermittelten Erntegutertrag sind diese Systeme ungeeignet einen Datentransfer zwischen beliebigen landwirtschaftlichen Arbeitsmaschinen und/oder stationären Einrichtungen im Sinne einer Prozesskettenoptimierung sowie die effiziente Einbindung von landwirtschaftlichen Arbeitsmaschinen in bestehende Prozessketten zu realisieren.

Es ist deshalb Aufgabe der Erfindung ein Kommunikationssystem für mobile sowie stationäre Einrichtungen vorzuschlagen, welches die beschriebenen Nachteile des Standes der Technik vermeidet und insbesondere eine ereignisorientierte Kommunikation zwischen den mobilen und stationären Einrichtungen gewährleistet.

Diese Aufgabe wird erfindungsgemäß durch die kennzeichnenden Merkmale des Anspruchs 1 gelöst.

Indem die wenigstens teilweise Überdeckung der Sende- und Empfangsbereiche der mobilen und/oder stationären Einrichtungen des erfindungsgemäßen Kommunikationssystems eine zufällige Kommunikation zwischen diesen hervorruft und wobei diese zufällige Kommunikation in eine zielgerichtete Kommunikation übergeht, wird sichergestellt, dass beliebige mobile und/oder stationäre Einrichtungen untereinander ereignisorientiert kommunizieren können.

Im einfachsten Fall umfasst diese zielgerichtete Kommunikation das Anbieten relevanter Informationen durch erste mobile und/oder stationäre Einrichtungen auf welche dann weitere mobile und/oder stationäre Einrichtungen zielgerichtet reagieren. Dies schafft ein offenes Datenkommunikationssystem in dem bereitgestellte Informationen beliebig abgerufen werden können, ohne dass die kommunizierenden mobilen und stationären Einrichtungen hierfür von einem Betreiber mittels spezieller Maßnahmen in das Kommunikationssystem integriert werden müssen.

In vorteilhafter Weiterbildung der Erfindung kann das Reagieren auf die bereitgestellten Informationen sowohl die unmittelbare Verwendung der empfangenen Informationen als auch deren situationsgerechte Weiterverarbeitung in der jeweiligen mobilen oder stationären Einrichtung umfassen. Damit wird es möglich, für einen allgemeinen Anwendungsfall bereitgestellte Daten auf spezielle Anwendungsfälle anzupassen.

Um das Kommunikationssystem für einen beliebig großen Nutzerkreis verfügbar zu machen, kann in vorteilhafter Weiterbildung der Erfindung innerhalb des Kommunikationssystems mittels verschiedener Datenaustauschsysteme kommuniziert werden.

Damit die zielgerichtete Kommunikation nur zwischen solchen mobilen und/oder stationären Einrichtungen stattfindet, die in bestimmten Abhängigkeiten zueinander stehen, kann das Kommunikationssystem so ausgestaltet sein, dass während der zufälligen Kommunikation ein Anwendungszusammenhang zwischen den kommunizierenden mobilen und stationären Einrichtungen abgefragt wird und sofern dieser nicht besteht die Kommunikation abgebrochen wird. Dies hat insbesondere den Vorteil, dass ein nicht erforderlicher Datenaustausch vermieden wird.

Zudem kann das Kommunikationssystem so ausgestaltet sein, dass aus der Vielzahl übertragbarer Daten nur die für eine bestimmte Anwendung erforderlichen Daten bereitgestellt werden. Auch in diesem Fall wird der Datenaustausch auf die notwendigen Daten beschränkt.

Ein besonders effizientes Kommunikationssystem wird dann geschaffen, wenn die ausgetauschten anwendungsabhängigen Informationen unmittelbar die Abarbeitung von Prozessen hervorrufen, ohne dass die Betreiber der mobilen oder stationären Einrichtungen hierfür Handhabungen vornehmen müssen. Eine wesentliche Arbeitserleichterung für die Betreiber der mobilen und stationären Einrichtungen ergibt sich dann, wenn die Prozesse das Generieren und Abarbeiten von Fahranweisungen, die Generierung von Warnmeldungen, Anweisungen zur Auftragserledigung, Aktualisierung von Auftragsinformationen und eine automatische Prozessdatenerfassungen umfassen.

Damit zudem neben einer stabilen Kommunikation sichergestellt ist, dass überhaupt nur ausgewählte mobile und stationäre Einrichtung zunächst eine zufällige Kommunikation miteinander aufnehmen, kann die zufällige Kommunikation in Abhängigkeit von Randbedingungen zugelassen oder verweigert werden. Im einfachsten Fall umfassen diese Randbedingungen definierte Geokoordinaten der mobilen und stationären Einrichtungen, definierte und detektierte Feldstärken von Sende- und Empfangsbereichen, definierte und gemessene Entfernungen, gesendete Rundrufe, in den Sende- und Empfangseinheiten hinterlegte logische Zusammenhänge zwischen den mobilen und stationären Einrichtungen sowie Sensoriken zur Erkennung kommunizierender Sende- und Empfangseinheiten.

Damit die Dateninhalte der gesendeten Informationssignale effizient entschlüsselt und weiterverarbeitet werden können, sind in einer vorteilhaften Ausgestaltung der Erfindung die Dateninhalte strukturiert, wobei die Struktur im Wesentlichen die Unterteilung in Grunddaten und spezifische Daten umfasst.

In vorteilhafter Weiterbildung der Erfindung werden mittels der Grunddaten Auswahlkriterien für die miteinander in Kommunikation tretenden mobilen und stationären Einrichtungen geschaffen. Dabei können die Grunddaten unter anderem Teilnehmeridentifikationen, geographische Positionsdaten, Zeitfenster, Fahrgeschwindigkeiten und Fahrtrichtungsinformationen umfassen. Die spezifischen Daten hingegen beinhalten spezifische Parameter des jeweiligen Prozesses und Interpretationsalgorithmen, die es auf einfache Weise erlauben, übertragene Parameter eines Prozesses auf die speziellen Bedingungen eines anderen Prozesses anzupassen. Dies hat den Vorteil, dass auch allgemeine Dateninhalte auf spezielle Sachverhalte angepasst werden können.

Indem die auf der zufälligen Kommunikation basierende zielgerichtete Kommunikation zwischen mobilen und stationären Einrichtungen selbsttätig die Kommunikation mit Dritten herstellt, wird sichergestellt, dass stets die mobilen und stationären Einrichtungen in das Kommunikationssystem eingebunden sind, die zur Abarbeitung bestimmter Prozesse, wie etwa das Ernten, der Abtransport und die Einlagerung von Erntegut in landwirtschaftlichen Anwendungsfällen erforderlich sind.

Das erfindungsgemäße Kommunikationssystem ergibt sich dann, wenn die mobilen Einrichtungen als landwirtschaftliche Arbeitsmaschinen ausgeführt sind und das Kommunikationssystem zur Optimierung von landwirtschaftlichen Prozessketten eingesetzt wird.

Indem eine zunächst zufällige und dann zielgerichtete Kommunikation zwischen mobilen und stationären Einrichtungen nur zugelassen wird, wenn zwischen den in das Kommunikationssystem einzubindenden mobilen und stationären Einrichtung ereignisabhängige und/oder ortsabhängige Beziehungen bestehen, wird sichergestellt, dass die Kommunikation stets ereignisorientiert ist, sodass ein nicht erforderlicher Datenaustausch vermieden wird.

In vorteilhafter Weiterbildung der Erfindung kann die auf ortsabhängigen Beziehungen beruhende Kommunikation unter Einbeziehung GPS-basiert Daten vorgenommen werden.

In einem ersten vorteilhaften landwirtschaftlichen Anwendungsfall kann das Kommunikationssystem als Fahrtunterstützungssystem ausgebildet sein, welches im Bedarfsfall geplante Fahrtrouten, Anweisungen für Überladevorgänge zwischen landwirtschaftlichen Arbeitsmaschinen sowie sicherheitsrelevante Daten zur Vermeidung von Kollisionen überträgt. Dies hat insbesondere den Vorteil, dass sich für den Betreiber der landwirtschaftlichen Arbeitsmaschine die Orientierung auf dem Feld erheblich vereinfacht.

In einem weiteren vorteilhaften landwirtschaftlichen Anwendungsfall kann das Kommunikationssystem als Verfahrensdatentransfersystem ausbildet sein, welches die Autorisierung und Freischaltung von Nutzern und Funktionen für definierte Arbeitsverfahren und -abläufe sowie die Dokumentation von Prozessdaten umfasst. Insbesondere für den Einsatz von landwirtschaftlichen Arbeitsmaschinen in Verbänden kann damit eine effiziente Kommunikation betrieben und auf die in die Erntekette integrierten landwirtschaftlichen Arbeitsmaschinen beschränkt werden.

In einem weiteren vorteilhaften landwirtschaftlichen Anwendungsfall kann das Kommunikationssystem als Informationsdienstsystem ausgebildet sein, welches maschinen- und pflanzenspezifische Parameter sowie äußere Randbedingungen bereitstellt. Indem die maschinenspezifischen Parameter Maschineneinstellempfehlungen, die pflanzenspezifischen Parameter Ernteguteigenschaften und die äußeren Randbedingungen Bodenzustände und Klimainformationen sein können, wird ein Kommunikationssystem geschaffen, welches schnell und effizient eine Optimierung der einstellbaren Parameter der Arbeitsorgane der in das Kommunikationssystem integrierten landwirtschaftlichen Arbeitsmaschinen ermöglicht.

In vorteilhafter Weiterbildung des erfindungsgemäßen Kommunikationssystems kann die Bereiststellung von Maschinenparametern auch die regionenspezifische Bereitstellung von Maschineneinstellungen umfassen.

Eine breite Anwendung des erfindungsgemäßen Kommunikationssystems kann zudem dadurch erreicht werden, wenn die Kommunikation Internet-basiert erfolgt.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: das erfindungsgemäße Kommunikationssystem an Hand eines landwirtschaftlichen Anwendungsfalles
- Figur 2: Details des Kommunikationssystems an Hand eines landwirtschaftlichen Anwendungsfalles
- Figur 3: eine schematische Flussbilddarstellung des erfindungsgemäßen Kommunikationssystems
- Figur 4: einen weiteren landwirtschaftlichen Anwendungsfall des erfindungsgemäßen Kommunikationssystems
- Figur 5: einen nicht landwirtschaftlichen Anwendungsfall des erfindungsgemäßen Kommunikationssystems.

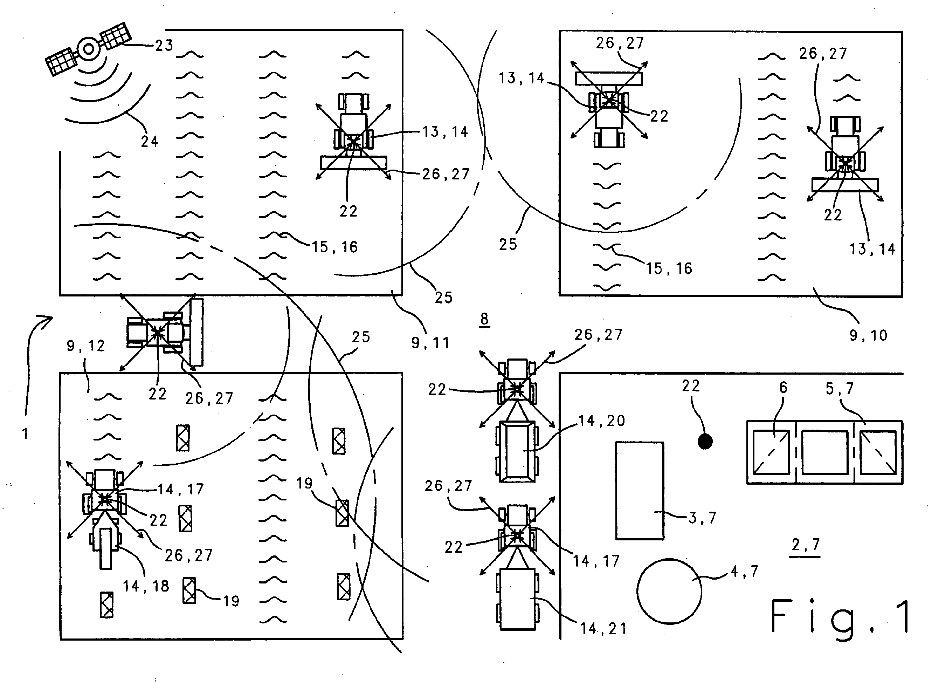

Figur 1 zeigt das erfindungsgemäße Kommunikationssystem 1 für einen landwirtschaftlichen Anwendungsfall. Im rechten unteren Bereich der Figur 1 ist ein landwirtschaftlicher Betrieb 2 schematisch dargestellt, der neben einer Getreidetrocknungseinrichtung 3 sowie einem Getreidelager 4 einen Werkstattbereich 5 umfasst, wobei der Werkstattbereich 5 in einzelne Reparaturbereiche 6 unterteilt ist. Der landwirtschaftliche Betrieb 2 als solcher sowie seine Struktureinheiten Getreidetrocknungseinrichtung 3, Getreidelager 4 und Werkstattbereich 5 bilden die stationären Einrichtungen 7 des noch näher zu beschreibenden erfindungsgemäßen Kommunikationssystems 1.

Über ein beliebig ausgeführtes Straßen- und Wegenetz 8 ist der landwirtschaftliche Betrieb 2 mit einer Vielzahl von zu bearbeitenden Territorien 9, hier Anbauflächen 10-12, verbunden. Auf einer ersten Anbaufläche 10 sind zwei als Mähdrescher 13 ausgeführte landwirtschaftliche Arbeitsmaschinen 14 im Ernteeinsatz, wobei die Mähdrescher 13 in an sich bekannter und deshalb nicht dargestellter Weise in einer Speichereinrichtung die geernteten Fruchtstände, hier in der Regel Getreidekörner, zwischenspeichern, während das im Ernteprozess anfallende Stroh 15 im rückwärtigen Bereich des Mähdreschers 13 als Schwad 16 auf der Anbaufläche 10 abgelegt wird. Auf einer weiteren Anbaufläche 11 ist in analoger Weise eine weitere als Mähdrescher 13 ausgeführte landwirtschaftliche Arbeitsmaschine 14 im Ernteeinsatz. Damit spiegelt die dargestellte Bearbeitung von landwirtschaftlichen Arbeitsflächen 10, 11 einen typischen Einsatz von Mähdreschern 13 in der Ernte wider, da regelmäßig aus Wirtschaftlichkeitsgründen zugleich mehrere Flurstücke 10, 11 von einer aus mehreren landwirtschaftlichen Arbeitsmaschinen 14 bestehenden Maschinenflotte bearbeitet werden. Zugleich ist eine weitere Anbaufläche 12 dargestellt, auf der eine von einem Schlepper 17 gezogene Ballenpresse 18 das in Schwaden 16 abgelegte Erntegut zu Erntegutballen 19 verpresst. Das Gespann aus Schlepper 17 und Ballenpresse 18 bildet dabei eine weitere landwirtschaftliche Arbeitsmaschine 14, die in noch näher zu beschreibender Weise in das erfindungsgemäße Kommunikationssystem 1 eingebunden sein kann.

Zur Veranschaulichung des erfindungsgemäßen Kommunikationssystems 1 sind in Figur 1 zudem in dem Straßen- und Wegenetz 8 bewegte weitere landwirtschaftliche Arbeitsmaschinen 14 dargestellt. Eine erste landwirtschaftliche Arbeitsmaschine 14 ist als Kombination eines Schleppers-17 mit einem befüllbaren Transportanhänger 20 ausgeführt, die in der Regel zum Aufnehmen der in der Speichereinrichtung des Mähdreschers 13 zwischengespeicherten Erntegutmenge eingesetzt wird. Eine weitere landwirtschaftliche Arbeitsmaschine 14 ist als Kombination eines mit einem Pritschenanhänger 21 gekoppelten Schleppers 17 ausgebildet, der gewöhnlich zur Auf nahme der auf dem zu bearbeitenden Territorium 9 abgelegten Emteguthallen 19 eingesetzt wird. Zudem können die auf dem Straßen- und Wegenetz 8 bewegten landwirtschaftlichen Arbeitsmaschinen 14 weitere Mähdrescher 13 sein. Es liegt im Rahmen der Erfindung, dass die in das Kommunikationssystem 1 einzubindenden landwirtschaftlichen Arbeitsmaschinen 14 beliebig ausgeführt sein können und beispielsweise auch Bodenbearbeitungsgeräte, Dünge- und Säeinheiten sowie verschiedenste Arten von Erntemaschinen umfassen.

Erfindungsgemäß verfügen die als landwirtschaftlichen Arbeitsmaschinen 14 ausgeführten mobilen Einrichtungen des Kommunikationssystems 1 und die als landwirtschaftlicher Betrieb 2 ausgeführte stationäre Einrichtung 7 über zumindest eine Sende- und Empfangseinheit 22, die zudem so strukturiert sein kann, dass sie durch Satelliten 23 generierte sogenannte GPS-Positionssignale 24 empfangen und verarbeiten kann. Jede dieser Sende- und Empfangseinheiten 22 kann innerhalb ihres Sende- und Empfangsbereiches 25 beliebig strukturierte Datensignale 26 empfangen oder in der jeweiligen landwirtschaftlichen Arbeitsmaschine 14 oder stationären Einrichtung 7 generierte Datensignale 27 in den jeweiligen Sende- und Empfangsbereich 25 abstrahlen. Es liegt im Rahmen der Erfindung, dass der gesamte landwirtschaftliche Betrieb 2 über eine einzige Sende- und Empfangseinheit 22 verfügt oder jeder Struktureinheit 3-5 eine separate Sende- und Empfangseinheit 22 zugeordnet ist.

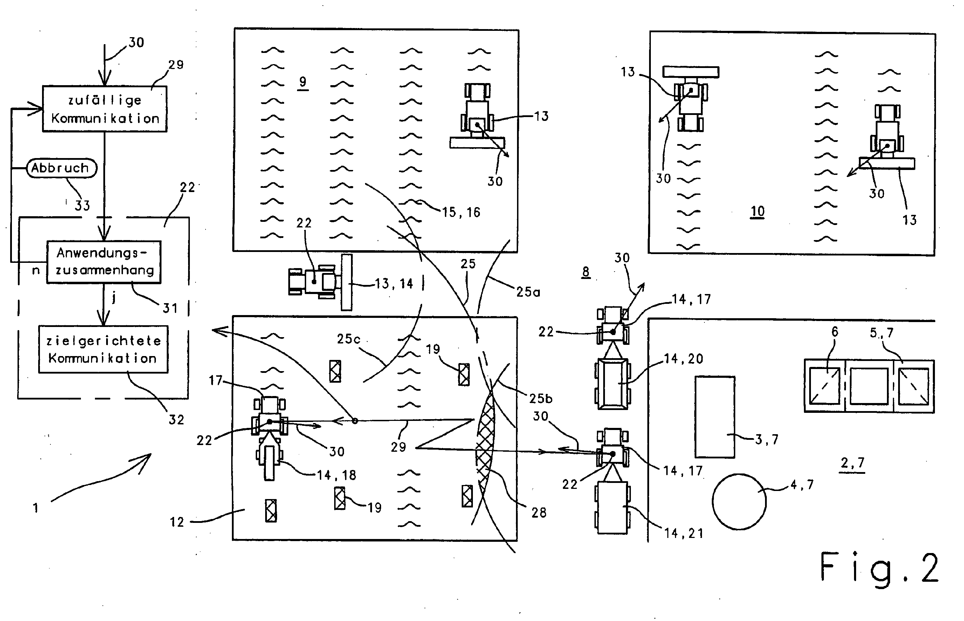

Durch die fahrtrichtungsabhängige Bewegung der landwirtschaftlichen Arbeitsmaschinen 14 kann es nun, wie in Figur 2 dargestellt, zur Überlappung von Sende- und Empfangsbereichen 25 verschiedenster landwirtschaftlicher Arbeitsmaschinen 14 untereinander oder mit den Sende- und Empfangsbereichen 25 der stationären Einrichtungen 7 kommen. Indem sich die als Gespann Schlepper 17 - Transportanhänger 20 und Schlepper 17 - Pritschenanhänger 21 sowie die als Mähdrescher 13 ausgeführten landwirtschaftlichen Arbeitsmaschinen 14 auf dem Straßen- und Wegenetz 8 bewegen, gelangen je nach Position der landwirtschaftlichen Arbeitsmaschinen 14 die Sende- und Empfangsbereiche 25, 25a-c verschiedenster landwirtschaftlicher Arbeitsmaschinen 14 in zumindest teilweise Überdeckung. Wegen des sich so ausbildenden Überdeckungsbereiches 28 der einzelnen Sende- und Empfangsbereiche 25, 25a-c können die jeweiligen landwirtschaftlichen Arbeitsmaschinen 14 miteinander kommunizieren. Diese Möglichkeit des Kommunizierens bildet zunächst die erfindungsgemäß zufällige Kommunikation 29 zwischen verschiedensten als landwirtschaftliche Arbeitsmaschinen 14 ausgeführten mobilen Einrichtungen des Kommunikationssystems 1. Im dargestellten Ausführungsbeispiel treten beispielsweise alle auf dem Straßen- und Wegenetz 8 bewegten landwirtschaftlichen Arbeitsmaschinen 14 in diese zufällige Kommunikation 29 mit der als Ballenpresse 18 ausgeführten landwirtschaftlichen Arbeitsmaschine 14. Zum Abtransportieren der auf der von der Ballenpresse 18 bearbeiteten Anbaufläche 12 abgelegten Erntegutballen 19 wird jedoch nur der Pritschenanhänger 21 auf der besagten Anbaufläche 12 benötigt. Weder der dargestellte Transportanhänger 20 noch der Mähdrescher 13 sind für den Abtransport der Erntegutballen 19 geeignet. Im einfachsten Fall kann die zufällige Kommunikation 29 dadurch zustande kommen, dass die Sende- und Empfangseinheit 22 des die Ballenpresse 19 ziehenden Schleppers 17 ein Informationssignal 30 generiert, welches beispielsweise die Anforderung eines Pritschenanhängers 21 und die georeferenzierte Übermittlung der Positionsdaten der auf der Anbaufläche 12 abgelegten Erntegutballen 19 umfasst. Die dieses Informationssignal 30 empfangenden landwirtschaftlichen Arbeitsmaschinen 14 würden sodann im einfachsten Fall in der Sende- und Empfangseinheit 22 zunächst überprüfen, ob das empfangene Informationssignale 30 für die jeweilige landwirtschaftliche Arbeitsmaschine 14 relevant ist. Dies könnte beispielsweise in der Weise erfolgen, dass in der die Informationssignale 30 empfangenden Sende- und Empfangseinheit 22 ein Anwendungszusammenhang 31 überprüft wird. Besteht ein solcher Anwendungszusammenhang 31 geht die zufällige Kommunikation in eine zielgerichtete Kommunikation 32 über. Im dargestellten Ausführungsbeispiel nach Figur 2 besteht dieser Anwendungszusammenhang 31 nur zwischen der Ballenpresse 18 und dem Schlepper 17 mit Pritschenanhänger 21, sodass nur zwischen diesen in erfindungsgemäßer Weise die zufällige Kommunikation 29 in eine zielgerichtete Kommunikation 32 übergeht. Für die in Figur 2 dargestellten übrigen auf dem Straßen- und Wegenetz 8 bewegten landwirtschaftlichen Arbeitsmaschinen 14 verharrt die Kommunikation in dem Status einer zufälligen Kommunikation 29 oder führt zum Abbruch 33 der Kommunikation. Der Betreiber des den Pritschenanhänger 21 ziehenden Schleppers 17 erhält über die Informationssignale 30 für ihn relevante Informationen, die dazu führen, dass er den Pritschenanhänger 21 zum Aufladen der Erntegutballen 19 auf die entsprechende Anbaufläche 12 lenkt. In vorteilhafter Weiterbildung der Erfindung können die übermittelten Informationssignale 30 zugleich eine optimierte Fahrtroute zum Aufnehmen der Erntegutballen 19 an den besagten Schlepper 17 übergeben. Indem der Betreiber des Schleppers diesen auf die fragliche Anbaufläche 12 lenkt und gegebenenfalls die vorgeschlagene Fahrtroute abarbeitet, führt das empfange Informationssignal 30 zugleich zu einer konkreten Reaktion der landwirtschaftlichen Arbeitsmaschine 14 auf die empfangenen Informationssignale 30.

Ein weiterer Anwendungsfall des erfindungsgemäßen Kommunikationssystems 1 ergibt sich beispielsweise dann, wenn der den Transportanhänger 20 ziehende Schlepper 17 als sogenanntes Abtankfahrzeug für die als Mähdrescher 13 ausgeführten landwirtschaftlichen Arbeitsmaschinen 14 eingesetzt werden soll. Dieser Überladeprozess wird im Wesentlichen davon bestimmt, wann und an weichem Ort welcher Mähdrescher 13 abgetankt werden muss oder in welcher Reihenfolge und wann die befüllten Mähdrescher 13 das Abtankfahrzeug 17, 20 ansteuern dürfen, damit diese sich nicht gegenseitig beim Überladevorgang behindern. In diesem Fall findet schließlich die zielgerichtete Kommunikation 32 zwischen dem den Transportanhänger 20 ziehenden Schlepper 17 und den auf den jeweiligen Anbauflächen 10, 11 eingesetzten Mähdreschern 13 statt, wobei es im Rahmen der Erfindung liegt, dass sowohl der Schlepper 17 als auch die Mähdrescher 13 die die zufällige Kommunikation 29 in eine zielgerichtete Kommunikation 32 überführenden Informationssignale 30 generieren können.

Ein weiterer, häufig auftretender Anwendungsfall betrifft die zielgerichtete Kommunikation 32 von Mähdreschern 13 untereinander. Beispielsweise könnte der auf dem Straßen- und Wegenetz 8 bewegte Mähdrescher 13 zur Unterstützung bereits im Einsatz befindlicher Mähdrescher 13 vorgesehen sein. Dann könnten die von den im Einsatz befindlichen Mähdreschern 13 generierten Informationssignale 30 beispielsweise Informationen zur Parametereinstellung der Arbeitsorgane des neu hinzukommenden Mähdreschers 13 umfassen, die dann an diesem Mähdrescher 13 entweder automatisch oder durch den Betreiber eingestellt werden, sodass der neu hinzutretende Mähdrescher 13 bereits mit optimierten Parametereinstellungen den Ernteprozess beginnt. Indem der weitere Mähdrescher 13 unmittelbar die an ihn übertragenen und bereits optimierten Parametereinstellungen automatisch übernimmt reagiert er in einer ersten erfindungsgemäßen Weise. Denkbar ist es aber auch, dass der weitere Mähdrescher 13 in einer zweiten erfindungsgemäßen Weise die an ihn übermittelten Parametereinstellungen situationsgerecht weiterverarbeitet. Auf das dargestellte Beispiel bezogen könnte dies bedeuten, dass der weitere Mähdrescher von den übermittelten Parametern nur die übernimmt, die auch an dem weiteren Mähdrescher 13 einstellbar sind, oder dass die übermittelten Parameter in Abhängigkeit von dem speziellen Typ des Mähdreschers 13 abgewandelt werden. So variieren beispielsweise die Drehzahlen der verschiedensten Arbeitsorgane eines Mähdreschers 13, trotz gleicher Ernteguteigenschaften, zwischen den Mähdreschertypen verschiedener Hersteller zum Teil erheblich. Indem die Sende- und Empfangseinheit 22 des hinzutretenden weiteren Mähdreschers 13 nur die Parameter des Erntegutes berücksichtigt und aus diesen die für den weiteren Mähdrescher 13 optimalen Parametereinstellungen der Arbeitsorgane ermittelt, erreicht das erfindungsgemäße Kommunikationssystem 1 zudem eine hohe Flexibilität bezüglich der in das Kommunikationssystem 1 einzubindenden landwirtschaftlichen Arbeitsmaschinen 14.

Es liegt im Rahmen der Erfindung, dass die zunächst zufällige Kommunikation 29 und die in Abhängigkeit von einem Anwendungszusammenhang 31 in eine zielgerichtete Kommunikation 32 übergehende Kommunikation auch zwischen landwirtschaftlichen Arbeitsmaschinen 14 und stationären Einrichtungen 7 stattfinden kann. Beispielsweise können die beladenen Anhängefahrzeuge 20, 21 beim Verlassen der jeweiligen Anbaufläche 10-12 zunächst in zufällige Kommunikation 29 mit der stationären Einrichtung 7 oder unmittelbar mit deren Struktureinheiten 3-6 gelangen. Die Sende- und Empfangseinheit 22 des den Transportanhänger 20 ziehenden Schleppers 17 kann über das von ihr generierte Informationssignal 30 der stationären Einrichtung 7 beispielsweise den Feuchtegehalt des transportierten Erntegutes übermitteln, sodass die stationäre Einrichtung 7 den besagten Schlepper 17 durch eine zielgerichtete Kommunikation 32 entweder in eine Getreidetrocknungseinrichtung 3 oder sofort in ein Getreidelager 4 zwecks Zwischenlagerung des Getreides lotst. Weiter ist es aber auch denkbar, dass beliebige landwirtschaftliche Arbeitsmaschinen 14 mit einer als Werkstatt 5 ausgeführten stationären Einrichtung 7 über eine zufällige Kommunikation 29 in eine zielgerichtete Kommunikation 32 treten, die letztlich dazu führt, dass die Informationssignale 30 der landwirtschaftlichen Arbeitsmaschine 14 die Werkstatt 5 über den zu behebenden Schaden informieren und umgekehrt, die Informationssignale 30 der stationären Einrichtung 7 die jeweilige landwirtschaftliche Arbeitsmaschine 14 in einen bestimmten Reparaturbereich 6 der Werkstatt dirigieren. Dies hat insbesondere den Vorteil, dass während der Fahrt der landwirtschaftlichen Arbeitsmaschine 14 zum Reparaturbereich 6 dieser bereits zielgerichtet so vorbereitet werden kann, dass beim Eintreffen der landwirtschaftlichen Arbeitsmaschine 14 die für die Reparatur erforderlichen Bauteile und Werkzeuge zusammengestellt sind, sodass die Reparatur unmittelbar mit dem Eintreffen der landwirtschaftlichen Arbeitsmaschine 14 beginnen kann. Dies verkürzt die unproduktiven und teuren Reparaturzeiten zum Teil erheblich.

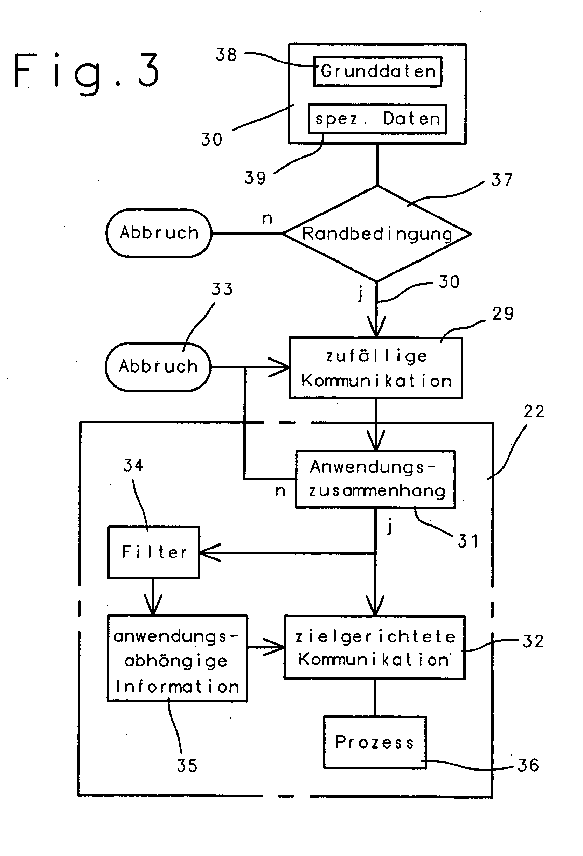

Indem die Sende- und Empfangseinheiten 22 zunächst einen Anwendungszusammenhang 31 zwischen den zufällig kommunizierenden landwirtschaftlichen Arbeitsmaschinen 14 ermitteln, sind die jeweiligen Sende- und Empfangseinheiten 22 zudem so strukturiert, dass sie die Vielzahl der in ihren Informationssignalen 30 kodierten Informationen gemäß Figur 3 mittels Softwarefilter 34 vorfiltern können, sodass die zielgerichtete Kommunikation 32 und die damit verbundene Abarbeitung von Prozessen 36 nur auf der Basis anwendungsabhängiger Informationen 35 erfolgt. Neben den bereits beschriebenen Prozessen 36, sind hier im landwirtschaftlichen Anwendungsfall eine Vielzahl von Abläufen denkbar. Beispielsweise kann der von der zielgerichteten Kommunikation 32 abhängende Prozess 36 das Generieren und Abarbeiten von Fahranweisungen, die Generierung von Warnmeldungen, die Erstellung von Anweisungen zur Auftragserledigung, die Aktualisierung von Auftragsinformationen sowie die Abarbeitung einer automatischen Prozessdatenerfassung umfassen.

Neben dem bereits beschriebenen Anwendungszusammenhang 31, der im Wesentlichen auf die Überprüfung eines sachlichen Zusammenhangs zwischen den kommunizierenden landwirtschaftlichen Arbeitsmaschinen 14 und/oder stationären Einrichtungen 7 abstellt, nachdem eine zufällige Kommunikation 29 zustande gekommen ist, kann das Aufnehmen der zufälligen Kommunikation 29 in der Weise an Randbedingungen 37 geknüpft sein, dass bereits die zufällige Kommunikation 29 nur bei Erfüllung dieser Randbedingungen 37 aufgenommen wird. Diese zu erfüllenden Randbedingungen 37 können beispielsweise die Detektion einer definierten Mindestfeldstärke der von den Sende- und Empfangseinheiten 22 empfangenen Informationssignale 30 sein, sodass eine stabil arbeitende Datenübertragung gewährleistet ist. Damit die Kommunikationsaktivitäten zwischen den landwirtschaftlichen Arbeitsmaschinen 14 und/oder den stationären Einrichtungen zudem auf dem notwendigen und nicht dem möglichen Niveau gehalten werden, können die zu erfüllenden Randbedingungen 37 außerdem definierte Entfernungen und Geokoordinaten umfassen, die sicherstellen, dass die zunächst zufällige Kommunikation 29 nur zugelassen wird, wenn sich die miteinander Kommunizierenden 7, 14 in diesen eng abgegrenzten territorialen Bereichen aufhalten. Unter dem gleichen Gesichtspunkt kann die zu erfüllende Randbedingung 37 die Sendung eines sogenannten Rundrufes sein, der gezielt ausgewählte landwirtschaftliche Arbeitsmaschinen 14 und/oder stationäre Einrichtungen 7 anspricht, sodass nur zwischen diesen eine zufällige Kommunikation 29 einsetzt. In Analogie zu dem bereits beschriebenen Anwendungszusammenhang 31 können die erfindungsgemäßen Randbedingungen 37 auch in den Sende- und Empfangseinheiten 22 hinterlegte, einen Zusammenhang zwischen den landwirtschaftlichen Arbeitsmaschinen 14 und stationären Einrichtungen 7 definierende Logiken sein. Desweiteren ist es denkbar, dass die Randbedingungen 37 allein die Erkennung mobiler oder stationärer Einrichtungen (7,14) mittels geeigneter Sensoren umfasst, ohne dass weitere spezielle Bedingungen erfüllt sein müssen.

Die dieses Informationssignal 30 empfangenden landwirtschaftlichen Arbeitsmaschinen 14 würden sodann im einfachsten Fall in der Sende- und Empfangseinheit 22 zunächst überprüfen, ob das empfangene Informationssignale 30 für die jeweilige landwirtschaftliche Arbeitsmaschine 14 relevant ist, wobei diese Abfrage insbesondere durch in den jeweiligen Sende- und Empfangseinheiten 22 hinterlegte Logiken realisiert werden kann. Dies könnte beispielsweise in der Weise erfolgen, dass in der die Informationssignale 30 empfangenden Sende- und Empfangseinheit 22 ein Anwendungszusammenhang 31 überprüft wird. Besteht ein solcher Anwendungszusammenhang 31 geht die zufällige Kommunikation in eine zielgerichtete Kommunikation 32 über.

Damit die Informationssignale 30 in der jeweiligen Sende- und Empfangseinheit 22 durch Anwendung einfacher Signalverarbeitungsalgorithmen effizient weiterverarbeitbar sind, übertragen die Informationssignale 30 strukturierte Dateninhalte in der Weise, dass sich die Informationssignale 30 aus Grunddateninhalten 38 und spezifischen Dateninhalten 39 zusammensetzen. Dabei umfassen die zunächst von der jeweiligen Sende- und Empfangseinheit 22 zu prüfenden Grunddaten 38 im Wesentlichen die bereits beschriebenen Randbedingungen 37 sowie Informationen bezüglich des Anwendungszusammenhangs 31. Insbesondere bezüglich des Anwendungszusammenhangs 31 können die Grunddaten 38 im einfachsten Fall Teilnehmeridentifikationen, sogenannte ID's, umfassen. Weiter kann die Kommunikation zwischen dem Getreidelager 4 und einem gerade entladenen Transportanhänger 20 dann aufgehoben werden, wenn der Transportanhänger 20 das Getreidelager 4 verlässt, der entladene Transportanhänger 20 sich von dem Getreidelager 4 entfernt, Dies kann in den Informationssignalen 30 dadurch kodiert werden, dass sie Information zur Fahrtrichtung und/oder Entfernung umfassen, die schließlich zum Abbruch der Kommunikation führen oder eine solche gar nicht zulassen. Im Bereich der Logistik können diese Grunddaten 38 zudem Informationen zur Fahrgeschwindigkeit von Transportfahrzeugen, ihrer momentanen Position und sogenannte Zeitfenster umfassen, sodass Transportfahrzeuge zur Abarbeitung beispielsweise eines Speditionsauftrages überhaupt nur in eine zufällige Kommunikation mit einer Leitstelle treten, wenn das Transportfahrzeug die in den Grunddaten 38 definierten Randbedingungen 37 erfüllt

Auf den landwirtschaftlichen Anwendungsfall bezogen, umfassen die spezifischen Daten 39 in der Regel die Übertragung maschinenspezifischer Einstellparameter, erntegutspezifischer Parameter und äußerer Randbedingungen wie etwa Temperatur, Luftfeuchtigkeit und geographische Besonderheiten. Zudem umfassen die spezifischen Daten 39, wie bereits beschrieben, auch die Interpretation der empfangenen informationssignale 30, nämlich im einfachsten Fall dann, wenn die übermittelten Einstellparameter einer landwirtschaftlichen Arbeitsmaschine 14 an die Bedingungen auf einer landwirtschaftlichen Arbeitsmaschine 14 anderen Typs transformiert werden müssen.

Zudem ist das erfindungsgemäße Kommunikationssystem 1 so ausgeführt, dass die landwirtschaftlichen Arbeitsmaschinen 14 und/oder stationären Einrichtungen 7 mittels beliebiger Datenaustauschsysteme miteinander kommunizieren können. Wegen der inzwischen großen Verbreitung könnte dies beispielsweise eine Internet-basierende Kommunikation 29, 32 sein.

Indem einerseits die zufällige Kommunikation 29 an die Erfüllung bestimmter Randbedingungen 37 gekoppelt sein kann und zum anderen eine zielgerichtete Kommunikation 32 nur bei bestehendem Anwendungszusammenhang 31 eingeleitet wird, kann die Kommunikation zwischen den landwirtschaftlichen Arbeitsmaschinen 14 und/oder stationären Einrichtungen 7 ereignisabhängig und/oder ortsabhängig gesteuert werden, wobei die ortsabhängige Steuerung GPS-basiert erfolgen kann.

In einer weiteren Ausgestaltung der Erfindung kann das Kommunikationssystem 1 auch so strukturieret sein, dass die auf der zunächst zufälligen Kommunikation 29 basierende zielgerichtete Kommunikation 32 die automatische Einbindung weiterer landwirtschaftlicher Arbeitsmaschinen 14 und/oder stationärer Einrichtungen 7 in das Kommunikationssystem 1 umfasst. Ein Anwendungsfall wäre beispielsweise der, dass eine Getreidetrocknungseinrichtung 3 in Abhängigkeit von ihrer Auslastung automatisch weitere Getreidetrocknungseinrichtungen 3 in das Kommunikationssystem 1 einbindet, sodass die Transportfahrzeuge 17, 20 rechtzeitig eine Information 30 darüber erhalten, wann eine andere Getreidetrocknungseinrichtung 3 anzufahren ist.

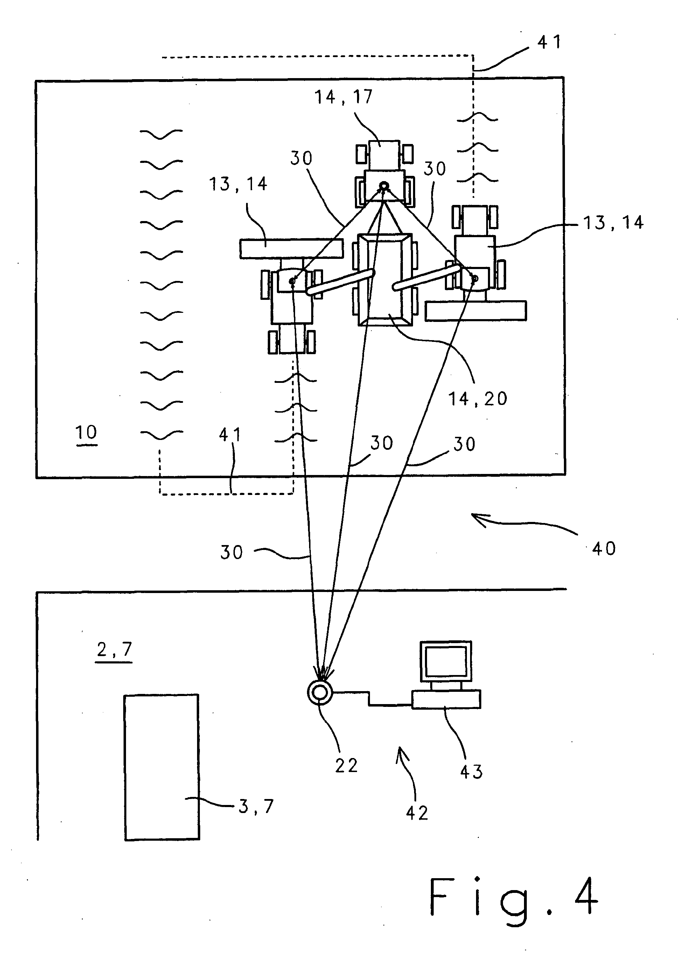

Gemäß Figur 4 kann die zielgerichtete Kommunikation 32 ein sogenanntes Fahrtunterstützungssystem 40 bilden, welches die Erntefahrten der Mähdrescher 13 auf der Anbaufläche 10 sowie die Fahrten während des Abtankvorganges am Transportanhänger 20 koordiniert. Dabei kann das Fahrtunterstützungssystem 40 aufeinander abgestimmte Fahrtrouten 41 der landwirtschaftlichen Arbeitsmaschinen 14 sowie Anweisungen an die Betreiber der landwirtschaftlichen Arbeitsmaschinen 14, insbesondere Sicherheitshinweise zur Vermeidung von Kollisionen zwischen den landwirtschaftlichen Arbeitsmaschinen 14 generieren.

Weiter kann die zielgerichtete Kommunikation 32 ein Verfahrensdatentransfersystem 42 bilden, in welchem die Informationssignale 30 Prozessdaten des Ernteprozesses umfassen, die beispielsweise in einer zentralen Rechnereinheit 43 abrufbar hinterlegt werden. Ein solches Verfahrensdatentransfersystem 42 vereinfacht beispielsweise Leistungsabrechnungen, wie etwa die ertrags-, flächenleistungs- und einsatzzeitabhängige Abrechnung der erbrachten Ernteleistung von angemieteten Mähdreschern 13.

Wie bereits beschrieben kann die zielgerichtete Kommunikation 32 auch als Informationsdienstsystem ausgebildet sein, welches im einfachsten Fall maschinen- und erntegutspezifische Parameter sowie äußere Randbedingungen zwischen landwirtschaftlichen Arbeitsmaschinen 14 austauscht. Dabei umfassen die maschinenspezifischen Parameter Einstellempfehlungen für die Arbeitsorgane der landwirtschaftlichen Arbeitsmaschinen 14, während sich die pflanzenspezifischen Parameter im Wesentlichen auf Ernteguteigenschaften und die äußeren Randbedingungen auf Bodenzustände und Klimainformationen beziehen. In diesem Zusammenhang ist es auch denkbar, dass die bereitgestellten Einstellempfehlungen regionenspezifisch generiert werden.

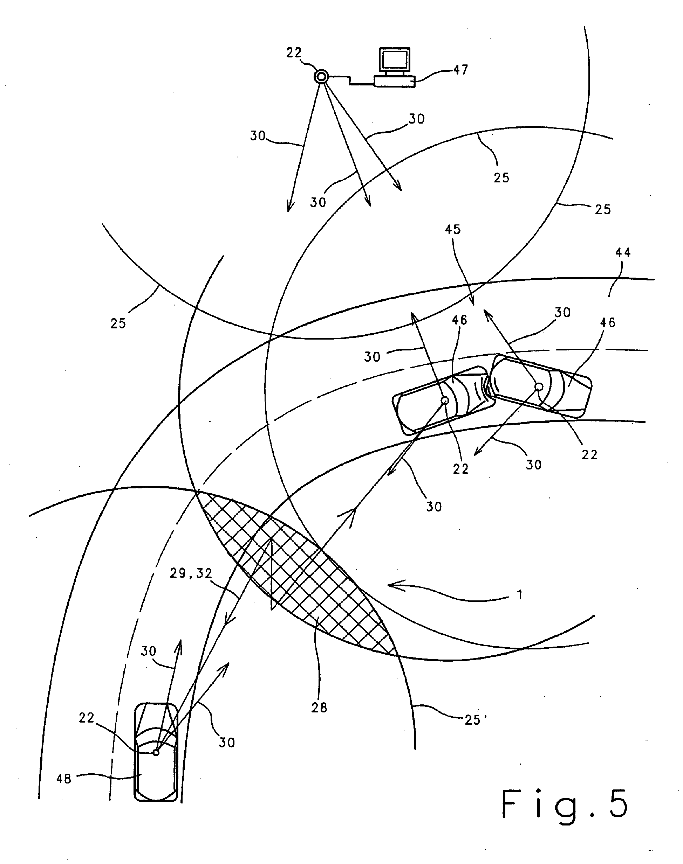

Beispielhaft zeigt Figur 5 eine außerhalb des landwirtschaftlichen Anwendungsfalles liegende Anwendung des erfindungsgemäßen Kommunikationssystems 1. Auf einer Straße 44 hat sich ein Unfall 45 zwischen zwei Fahrzeugen 46 ereignet. Die Sende- und Empfangseinheiten 22 der die mobilen Einrichtungen des Kommunikationssystems 1 bildenden Fahrzeuge 46 oder einer als zentrale Unfallleitstelle 47 ausgeführten stationären Einrichtung 7 senden beispielsweise als erfindungsgemäße Informationssignale 30 die geographischen Positionsdaten der Unfallstelle innerhalb des jeweiligen Sende- und Empfangsbereiches 25 aus. Ein auf der gleichen Straße 44 in Richtung des Unfall 45 fahrendes weiteres Fahrzeug 48 empfängt mittels seiner Sende- und Empfangseinheit 22 innerhalb seines Sende- und Empfangsbereiches 25' in einem Überdeckungsbereich 28 die den Unfall 45 betreffenden lnformationssignale 30. Erfindungsgemäß wird die zunächst zufällige Kommunikation 29 durch die jeweiligen Sende- und Empfangseinheiten 22 in eine zielgerichtete Kommunikation 32 übergeleitet. Im einfachsten Fall würde der Fahrer des sich in Richtung des Unfalls 45 bewegenden Fahrzeugs 48 automatisch einen Warnhinweis erhalten, sodass dieser die Fahrgeschwindigkeit verringern und erforderlichenfalls anhalten kann. Es liegt im Rahmen der Erfindung, dass der Empfang der Unfallinformation ein automatisches Abbremsen des nachfolgenden Fahrzeugs 48 bewirkt, ohne dass der Fahrer in diesen Vorgang involviert wird. Dies hat insbesondere den Vorteil, dass auch wegen der zum Teil sehr hohen Fahrgeschwindigkeit sehr schnell und unabhängig von der Reaktionszeit des Fahrers auf die Unfallinformationen reagiert werden kann.

### Bezugszeichenliste:

- 1: Kommunikationssystem
- 2: landwirtschaftlicher Betrieb
- 3: Getreidetrocknungseinrichtung
- 4: Getreidelager
- 5: Werkstattbereich
- 6: Reparaturbereich
- 7: stationäre Einrichtung
- 8: Straßen- und Wegenetz
- 9: zu bearbeitendes Territorium
- 10-12: Anbaufläche
- 13: Mähdrescher
- 14: landwirtschaftliche Arbeitsmaschine
- 15: Stroh
- 16: Schwad
- 17: Schlepper
- 18: Ballenpresse
- 19: Erntegutballen
- 20: Transportanhänger
- 21: Pritschenanhänger
- 22: Sende- und Empfangseinheit
- 23: Satellit
- 24: GPS-Positionssignale
- 25: Sende- und Empfangsbereichen
- 26: Datensignale
- 27: Datensignale
- 28: Überdeckungsbereich
- 29: zufällige Kommunikation
- 30: Informationssignal
- 31: Anwendungszusammenhang
- 32: zielgerichtete Kommunikation
- 33: Abbruch Kommunikation
- 34: Softwarefilter
- 35: anwendungsabhäng. Information
- 36: Prozess
- 37: Randbedingung
- 38: Grunddaten
- 39: spezifische Daten
- 40: Fahrtunterstützungssystem
- 41: Fahrtroute
- 42: Verfahrensdatentransfersystem
- 43: Rechnereinheit
- 44: Straße
- 45: Unfall
- 46: Fahrzeug
- 47: Unfallleitstelle
- 48: Fahrzeug

## Patentansprüche

1. Kommunikationssystem für mobile und stationäre Einrichtungen wobei die mobilen und stationären Einrichtungen über zumindest eine Sende- und Empfängselnheit verfügen, die einen definierten Sende- und Empfangsbereich umfasst,
**dadurch gekennzeichnet,**
**dass** die wenigstens teilweise Überdeckung (28) der Sende- und Empfangsbereiche (25) der mobilen und/oder stationären Einrichtungen (7, 14, 46, 48) eine zufällige Kommunikation (29) zwischen diesen hervorruft, die zufällige Kommunikation das wechselweise Überprüfen der von den mobilen und/oder stationären Einrichtungen (7, 14, 46, 48) ausgesendeten Informationssignale (30) in der jeweiligen Sende- und Empfangseinheit (22) auf einen Anwendungszusammenhang (31) umfasst, die zufällige Kommunikation (29) dann in eine zielgerichtete Kommunikation (32) zwischen den mobilen und/oder stationären Einrichtungen (7, 14, 46, 48) übergeht, wenn ein Anwendungszusammenhang (31) ermittelt wird **und die mobilen Einrichtungen als landwirtschaftliche Arbeitsmaschinen ausgebildet sind und die zielgerichtete Kommunikation eine Optimierung von landwirtschaftlichen Prozessketten realisiert.**

2. Kommunikationssystem für mobile und stationäre Einrichtungen nach Anspruch 1,
**dadurch gekennzeichnet,**
**dass** die zielgerichtete Kommunikation (32) zumindest das Anbieten von anwendungsabhängigen Informationen (30,35) und das Reagieren auf diese anwendungsabhängigen Informationen (30, 35) umfasst.

3. Kommunikationssystem für mobile und stationäre Einrichtungen nach Anspruch 2, **dadurch gekennzeichnet,**
**dass** das Reagieren auf diese anwendungsabhängigen Informationen (30, 35) das automatische Verwenden dieser anwendungsabhängigen Informationen (30, 35) und/oder deren situationsgerechte Weiterverarbeitung umfasst.

4. Kommunikationssystem für mobile und stationäre Einrichtungen nach einem der vorhergehenden Ansprüche,
**dadurch gekennzeichnet,**
**dass** die Kommunikation (29, 32) zwischen verschiedenen Datenaustauschsystemen stattfinden kann.

5. Kommunikationssystem für mobile und stationäre Einrichtungen nach einem der vorhergehenden Ansprüche,
**dadurch gekennzeichnet,**
**dass** während der zufälligen Kommunikation (29) ein Anwendungszusammenhang (31) zwischen den kommunizierenden mobilen und/oder stationären Einrichtungen (7, 14, 46, 48) abgefragt wird und beim Fehlen eines solchen Anwendungszusammenhangs (31) ein Abbruch (33) der zufälligen Kommunikation (29) erfolgt.

6. Kommunikationssystem für mobile und stationäre Einrichtungen nach einem der vorhergehenden Ansprüche,
**dadurch gekennzeichnet,**
**dass** die relevanten Informationen (30, 35) anwendungsabhängig bereitgestellt werden.

7. Kommunikationssystem für mobile und stationäre Einrichtungen nach Anspruch 6, **dadurch gekennzeichnet,**
**dass** die anwendungsabhängigen Informationen (35) die Abarbeitung von Prozessen (36) hervorrufen.

8. Kommunikationssystem für mobile und stationäre Einrichtungen nach Anspruch 7, **dadurch gekennzeichnet,**
**dass** die Prozesse (36) das Generieren und Abarbeiten von Fahranweisungen, die Generierung von Warnmeldungen, die Anweisungen zur Auftragseriedigung, die Aktualisierung von Auftragsinformationen und eine automatische Prozessdatenerfassungen sein können.

9. Kommunikationssystem für mobile und stationäre Einrichtungen nach einem der vorhergehenden Ansprüche,
**dadurch gekennzeichnet,**
**dass** die zufällige Kommunikation (29) in Abhängigkeit von Randbedingungen (37) zugelassen oder verweigert wird.

10. Kommunikationssystem für mobile und stationäre Einrichtungen nach Anspruch 9, **dadurch gekennzeichnet,**
**dass** die Randbedingungen (37) definierte Geokoordinaten, definierte und detektierte Feldstärken von Sende- und Empfangsbereichen (25), definierte und gemessene Entfernungen, gesendete Rundrufe, in den Sende- und Empfangseinheiten (22) hinterlegte logische Zusammenhänge zwischen den mobilen und stationären Einrichtungen (7, 14, 46, 48) sowie Sensoriken zur Erkennung kommunizierender Sende- und Empfangseinheiten (22) sein können.

11. Kommunikationssystem für mobile und stationäre Einrichtungen nach einem der vorhergehenden Ansprüche,
**dadurch gekennzeichnet,**
**dass** die informationasignale (30) der Kommunikation (29, 32) strukturiert sind.

12. Kommunikationssystem für mobile und stationäre Einrichtungen nach Anspruch 11, **dadurch gekennzeichnet,**
**dass** die informationssignale (30) Grunddaten (38) und spezifische Daten (39) umfassen.

13. Kommunikationssystem für mobile und stationäre Einrichtungen nach Anspruch 12, **dadurch gekennzeichnet,**
**dass** die Grunddaten (38) Teilnehmeridentifikationen, geographische Positionsdaten, Zeitfenster, Fahrgeschwindigkeiten und Fahrtrichtungsinformationen umfassen.

14. Kommunikationssystem für mobile und stationäre Einrichtungen nach Anspruch 12, **dadurch gekennzeichnet,**
**dass** die spezifischen Daten (39) das Senden von Parametern und die Interpretation von Parametern umfassen.

15. Kommunikationssystem für mobile und stationäre Einrichtungen nach einem der vorhergehenden Ansprüche,
**dadurch gekennzeichnet,**
**dass** die auf der zufälligen Kommunikation (29) basierende zielgerichtete Kommunikation (32) zwischen mobilen und/oder stationären Einrichtungen (7, 14, 46, 48) selbsttätig die Kommunikation mit Dritten herstellt.

16. Kommunikationssystem für mobile und/oder stationäre Einrichtungen nach einem der vorhergehenden Ansprüche, **dadurch gekennzeichnet, dass** die zufällige Kommunikation (29) dann in eine zielgerichtete Kommunikation (32) übergeht, wenn zwischen den mobilen und/oder stationären Einrichtungen (7, 14, 46, 48) ereignisabhängige und/oder ortsabhängige Beziehungen bestehen.

17. Kommunikationssystem für mobile und stationäre Einrichtungen nach einem der vorhergehenden Ansprüche,
**dadurch gekennzeichnet,**
**dass** die Kommunikation (29, 32) ortsabhängig gesteuert wird und wobei die ortsabhängige Steuerung der Kommunikation (29, 32) GPS-basiert erfolgt.

18. Kommunikationssystem für mobile und stationäre Einrichtungen nach einem der vorhergehenden Ansprüche,
**dadurch gekennzeichnet,**
**dass** die zielgerichtete Kommunikation (32) ein Fahrtunterstützungssystem (40) bildet, welches im Bedarfsfall geplante Fahrtrouten, Anweisungen für Überladevorgänge zwischen landwirtschaftilchen Arbeitsmaschinen (14) sowie sicherheitsrelevante Daten überträgt.

19. Kommunikationssystem für mobile und stationäre Einrichtungen nach einem der vorhergehenden Ansprüche,
**dadurch gekennzeichnet,**
**dass** die zielgerichtete Kommunikation (32) ein Verfahrensdatentransfersystem (42) bildet, welches die Autorisierung und Freischaltung von Nutzern und Funktionen für definierte Arbeitsverfahren und Arbeitsabläufe sowie die Dokumentation von Prozessdaten umfasst.

20. Kommunikationssystem für mobile und stationäre Einrichtungen nach einem der vorhergehenden Ansprüche,
**dadurch gekennzeichnet,**
**dass** die zielgerichtete Kommunikation (32) ein Informationsdienstsystem bildet, welches maschinen- und pflanzenspezifische Parameter sowie äußere Randbedingungen bereitsteilt.

21. Kommunikationssystem für mobile und stationäre Einrichtungen nach Anspruch 20, **dadurch gekennzeichnet,**
**dass** die maschinenspezifischen Parameter Maschineneinstellempfehlungen, die pflanzenspezifischen Parameter Ernteguteigenschaften und die äußeren Randbedingungen Bodenzustände und Klimainformationen sein können.

22. Kommunikationssystem für mobile und stationäre Einrichungen landwirtschaftliche Arbeitsmaschinen nach einem der Ansprüche 20 oder 21,
**dadurch gekennzeichnet,**
**dass** die Bereistetellung von Maschinenparametern die regionenspezifische Bereitstellung von Maschineneinstellungen umfasst.

23. Kommunikationssystem für mobile und stationäre Einrichtungen nach einem der vorhergehenden Anspruche,
**dadurch gekennzeichnet,**
**dass** die Kommunikation (29, 32) internet-basiert erfolgt.

## Claims

1. A communication system for mobile and stationary devices, wherein the mobile and stationary devices have at least one transmitting and receiving unit which includes a defined transmitting and receiving region,
**characterised in that**
the at least partial overlap (28) of the transmitting and receiving regions (25) of the mobile and/or stationary devices (7, 14, 46, 48) causes random communication (29) between them, the random communication includes alternate checking of the information signals (30) emitted by the mobile and/or stationary devices (7, 14, 46, 48) in the respective transmitting and receiving unit (22) for an application relationship (31), the random communication (29) then changes to a targeted communication (32) between the mobile and/or stationary devices (7, 14, 46, 48) when an application relationship (31) is ascertained and the mobile devices are in the form of agricultural working machines and the targeted communication implements optimisation of agricultural process chains.

2. A communication system for mobile and stationary devices according to claim 1 **characterised in that** the targeted communication (32) includes offering application-dependent information (30, 35) and reacting to said application-dependent information (30,35).

3. A communication system for mobile and stationary devices according to claim 2 **characterised in that** the reaction to said application-dependent information (30,35) includes automatic use of said application-dependent information (30,35) and/or further processing thereof in a manner suited to the situation.

4. A communication system for mobile and stationary devices according to one of the preceding claims **characterised in that** the communication (29, 32) can take place between different data exchange systems.

5. A communication system for mobile and stationary devices according to one of the preceding claims **characterised in that** during the random communication (29) an application relationship (31) between the communicating mobile and/or stationary devices (7, 14, 46, 48) is queried and in the absence of such an application relationship (31) the random communication (29) is broken off (33).

6. A communication system for mobile and stationary devices according to one of the preceding claims **characterised in that** the relevant information (30,35) is prepared in application-dependent manner.

7. A communication system for mobile and stationary devices according to claim 8 **characterised in that** the application-dependent information (35) causes execution of processes (36).

8. A communication system for mobile and stationary devices according to claim 7 **characterised in that** the processes (36) can be generation and execution of travel instructions, generation of warning messages, instructions for order implementation, updating of order information and automatic process data acquisition.

9. A communication system for mobile and stationary devices according to one of the preceding claims **characterised in that** the random communication (29) is permitted or refused in dependence on boundary conditions (37).

10. A communication system for mobile and stationary devices according to claim 9 **characterised in that** the boundary conditions (37) can be defined geo-coordinates, defined and detected field strengths of transmitting and receiving regions (25), defined and measured distances, transmitted broadcasts, logical relationships stored in the transmitting and receiving units (22) between the mobile and stationary devices (7, 14, 46, 48) and sensor means for detecting communicating transmitting and receiving units (22).

11. A communication system for mobile and stationary devices according to one of the preceding claims **characterised in that** the information signals (30) of the communication (29, 32) are structured.

12. A communication system for mobile and stationary devices according to claim 11 **characterised in that** the information signals (30) include basic data (38) and specific data (39).

13. A communication system for mobile and stationary devices according to claim 12 **characterised in that** the basic data (38) include subscriber identifications, geographical position data, time windows, travel speeds and travel direction information.

14. A communication system for mobile and stationary devices according to claim 12 **characterised in that** the specific data (39) include the transmission of parameters and the interpretation of parameters.

15. A communication system for mobile and stationary devices according to one of the preceding claims **characterised in that** the targeted communication (32) based on the random communication (29) between mobile and/or stationary devices (7, 14, 46, 48) automatically produces the communication with third parties.

16. A communication system for mobile and stationary devices according to one of the preceding claims **characterised in that** the random communication (29) changes to a targeted communication (32) when event-dependent and/or location-dependent relationships exist between the mobile and/or stationary devices (7, 14, 46, 48).

17. A communication system for mobile and stationary devices according to one of the preceding claims **characterised in that** the communication (29, 32) is controlled in location-dependent fashion and wherein the location-dependent control of the communication (29, 32) is effected in GPS-based fashion.

18. A communication system for mobile and stationary devices according to one of the preceding claims **characterised in that** the targeted communication (32) forms a travel support system (40) which if necessary transmits planned travel routes, instructions for load transfer operations between agricultural working machines (14) and safety-relevant data.

19. A communication system for mobile and stationary devices according to one of the preceding claims **characterised in that** the targeted communication (32) forms a process data transfer system (42) which includes authorisation and enablement of users and functions for defined working processes and working procedures as well as the documentation of process data.

20. A communication system for mobile and stationary devices according to one of the preceding claims **characterised in that** the targeted communication forms an information service system which provides machine-specific and plant-specific parameters as well as external boundary conditions.

21. A communication system for mobile and stationary devices according to claim 20 **characterised in that** the machine-specific parameters can be machine setting recommendations, the plant-specific parameters can be crop material properties and the external boundary conditions can be ground conditions and climatic information.

22. A communication system for mobile and stationary devices agricultural working machines according to one of claims 20 and 21 **characterised in that** the provision of machine parameters includes region-specific preparation of machine settings.

23. A communication system for mobile and stationary devices according to one of the preceding claims **characterised in that** the communication (29, 32) is effected in Internet-based fashion.

## Revendications

1. Système de communication pour équipements mobiles et stationnaires, les équipements mobiles et stationnaires disposant d'au moins une unité d'émission et de réception qui possède une zone d'émission et de réception définie, **caractérisé en ce que** le recouvrement au moins partiel (28) des zones d'émission et de réception (25) des équipements mobiles et/ou stationnaires (7, 14, 46, 48) provoque une communication aléatoire (29) entre ceux-ci, la communication aléatoire comprenant la vérification réciproque des signaux d'information (30) émis par les équipements mobiles et/ou stationnaires (7, 14, 46, 48) dans l'unité d'émission et de réception (22) respective par rapport à un contexte d'application (31), **en ce que** la communication aléatoire (29) se transforme en une communication ciblée (32) entre les équipements mobiles et/ou stationnaires (7, 14, 46, 48) lorsqu'un contexte d'application (31) est déterminé, **en ce que** les équipements mobiles sont réalisés sous la forme de machines agricoles de travail et **en ce que** la communication ciblée réalise une optimisation de chaînes de processus agricoles.

2. Système de communication pour équipements mobiles et stationnaires selon la revendication 1, **caractérisé en ce que** la communication ciblée (32) comprend au moins la fourniture d'informations dépendantes de l'application (30, 35) et la réaction à ces informations dépendantes de l'application (30, 35).

3. Système de communication pour équipements mobiles et stationnaires selon la revendication 2, **caractérisé en ce que** la réaction à ces informations dépendantes de l'application (30, 35) comprend l'utilisation automatique de ces informations dépendantes de l'application (30, 35) et/ou leur traitement adapté à la situation.

4. Système de communication pour équipements mobiles et stationnaires selon une des revendications précédentes, **caractérisé en ce que** la communication (29, 32) peut avoir lieu entre différents systèmes d'échange de données.

5. Système de communication pour équipements mobiles et stationnaires selon une des revendications précédentes, **caractérisé en ce que**, pendant la communication aléatoire (29), un contexte d'application (31) est interrogé entre les équipements mobiles et/ou stationnaires (7, 14, 46, 48) en communication et, en cas d'absence d'un tel contexte d'application (31), une interruption (33) de la communication aléatoire (29) a lieu.

6. Système de communication pour équipements mobiles et stationnaires selon une des revendications précédentes, **caractérisé en ce que** les informations pertinentes (30, 35) sont mises à disposition en fonction de l'application.

7. Système de communication pour équipements mobiles et stationnaires selon la revendication 6, **caractérisé en ce que** les informations dépendantes de l'application (35) provoquent l'exécution de processus (36).

8. Système de communication pour équipements mobiles et stationnaires selon la revendication 7, **caractérisé en ce que** les processus (36) peuvent être la génération et l'exécution d'instructions de conduite, la génération de messages d'avertissement, les instructions pour l'exécution d'une commande, l'actualisation des informations d'une commande et une acquisition automatique de données de processus.

9. Système de communication pour équipements mobiles et stationnaires selon une des revendications précédentes, **caractérisé en ce que** la communication aléatoire (29) est acceptée ou refusée en fonction de conditions annexes (37).

10. Système de communication pour équipements mobiles et stationnaires selon la revendication 9, **caractérisé en ce que** les conditions annexes (37) peuvent être des coordonnées géographiques définies, des intensités de champ définies et détectées de zones d'émission et de réception (25), des distances définies et mesurées, des appels en diffusion émis, des relations logiques entre les équipements mobiles et stationnaires (7, 14, 46, 48) enregistrées dans les unités d'émission et de réception (22) ainsi que des capteurs permettant de reconnaître les unités d'émission et de réception (22) qui communiquent.

11. Système de communication pour équipements mobiles et stationnaires selon une des revendications précédentes, **caractérisé en ce que** les signaux d'information (30) de la communication (29, 32) sont structurés.

12. Système de communication pour équipements mobiles et stationnaires selon la revendication 11, **caractérisé en ce que** les signaux d'information (30) comprennent des données de base (38) et des données spécifiques (39).

13. Système de communication pour équipements mobiles et stationnaires selon la revendication 12, **caractérisé en ce que** les données de base (38) comprennent des identifications de participants, des données de position géographique, des créneaux horaires, des vitesses de marche et des informations de sens de marche.

14. Système de communication pour équipements mobiles et stationnaires selon la revendication 12, **caractérisé en ce que** les données spécifiques (39) comprennent l'émission de paramètres et l'interprétation de paramètres.

15. Système de communication pour équipements mobiles et stationnaires selon une des revendications précédentes, **caractérisé en ce que** la communication ciblée (32) entre des équipements mobiles et/ou stationnaires (7, 14, 46, 48) basée sur la communication aléatoire (29) établit automatiquement la communication avec des tiers.

16. Système de communication pour équipements mobiles et stationnaires selon une des revendications précédentes, **caractérisé en ce que** la communication aléatoire (29) se transforme en une communication ciblée (32) lorsqu'il existe des relations liées à des événements et/ou liées à des lieux entre les équipements mobiles et/ou stationnaires (7, 14, 46, 48).

17. Système de communication pour équipements mobiles et stationnaires selon une des revendications précédentes, **caractérisé en ce que** la communication (29, 32) est commandée en fonction du lieu, la commande de la communication (29, 32) en fonction du lieu étant basée sur une localisation par GPS.

18. Système de communication pour équipements mobiles et stationnaires selon une des revendications précédentes, **caractérisé en ce que** la communication ciblée (32) forme un système d'assistance à la conduite (40) qui, en cas de besoin, transmet des itinéraires planifiés, des instructions pour des opérations de transbordement entre machines de travail agricoles (14) ainsi que des données relatives à la sécurité.

19. Système de communication pour équipements mobiles et stationnaires selon une des revendications précédentes, **caractérisé en ce que** la communication ciblée (32) forme un système de transfert de données de procédure (42) qui comprend l'autorisation et la validation d'utilisateurs et de fonctions pour des procédures de travail et des séquences de travail définies ainsi que la documentation des données de processus.

20. Système de communication pour équipements mobiles et stationnaires selon une des revendications précédentes, **caractérisé en ce que** la communication ciblée (32) forme un système de service d'informations qui met à disposition des paramètres spécifiques à des machines et à des plantes ainsi que des conditions annexes extérieures.

21. Système de communication pour équipements mobiles et stationnaires selon la revendication 20, **caractérisé en ce que** les paramètres spécifiques à des machines peuvent être des recommandations de réglage d'une machine, les paramètres spécifiques à des plantes, des caractéristiques d'un produit de récolte et les conditions annexes extérieures des états du sol et des informations climatiques.

22. Système de communication pour équipements mobiles et stationnaires de machines de travail agricoles selon une des revendications 20 ou 21, **caractérisé en ce que** la mise à disposition de paramètres de machines comprend la mise à disposition de réglages de machines spécifiques à une région.

23. Système de communication pour équipements mobiles et stationnaires selon une des revendications précédentes, **caractérisé en ce que** la communication (29, 32) a lieu par l'intermédiaire d'Internet.
